# EUROPEAN PATENT APPLICATION

(11) **EP 1 047 239 A2**
(43) Date of publication of application: **25.10.2000**
(21) Application number: 00302379.3
(22) Date of filing: 23.03.2000
(51) Int. Cl.: H04L 29/06

(54) **System and method for stopping and resuming a data communication**

(30) Priority: 20.04.1999 JP 11263299
(71) Applicant: FUJITSU LIMITED, Kawasaki-shi, Kanagawa 211-8588 (JP)
(72) Inventor: Nakagawa, Itaru, Kawasaki-shi, Kanagawa 211-8588 (JP); Chikuma, Satoru, Kawasaki-shi, Kanagawa 211-8588 (JP); Fujino, Nobutsugu, Kawasaki-shi, Kanagawa 211-8588 (JP)
(74) Representative: Stebbing, Timothy Charles

(57) **Abstract**

The data communications system of the present invention comprises at least first and second communications devices (1,3) each provided with an application unit (11,31) for instructing to conduct data communications with an opposite application unit (31,11). The data communications system also comprises a communication control unit (13,34) which reports a transmission stop instruction to the respective application units (11,31) of the first and second communications devices (1,3) to make the respective applications temporarily stop the data communications if the data link established in the network between the first and second communications devices is disconnected due to some cause, and reports information based on data to be received or transmitted next by one application unit to the other application unit and makes the application units re-start the stopped transmission/reception of data based on the reported information.

## Description

The present invention relates to a data communications system for performing data communications between terminals and to a program used in such a system.

Conventionally, if a data link was disconnected due to some cause while a terminal (e.g. PC) conducted data communications with another terminal connected to a network using a TCP (transmission control protocol)/IP (internet protocol), the higher-order data communication session was also disconnected and the data communications had to be started again from the beginning by establishing again the data link. If in a conventional portable terminal, a data link was disconnected due to the change of electric wave state, etc., during data communications, information about the progress of data transmission was not stored when the data link is established again and the data communications had to be started again from the beginning, which was a problem.

The present invention has been made under these circumstances, and an embodiment of the present invention may provide a data communications system for enabling the re-start of stopped data communications from a stopped position and a program (which may be stored on a storage medium) to realize the data communications system.

The data communications system of the present invention comprises at least first and second communications devices, each provided with an application unit for instructing to conduct data communications with an opposite application unit. The data communications system also comprises first and second communication control units which report a transmission stop instruction to the respective application units of the first and second communications units to temporarily stop the data communications if a data link established in the network between the first and second communications control units is disconnected due to some cause, and informs one of the application units about data to be received or transmitted next to the other application unit and makes the application units re-start the transmission/reception of data based on the reported information if the data link is re-established in the network.

By adopting such a system configuration, the data communications can be re-started from a stopped position if the data link is re-established after a data link is disconnected due to some cause.

Reference will now be made, by way of example, to the accompanying drawings in which:-
Fig. 1 shows the basic configuration of the data communications system of the present invention.
Figs. 2A through 2C show the actual configurations of the data communications systems of the present invention. Fig. 2A shows a case where only one terminal is required to establish a data link with a router. Fig. 2B shows a case where both terminals are required to establish a data link with a router. Fig. 2C shows a case where there is an application program in a router, the application program which is the opposite application of the terminal.
Fig. 3 is a timing chart showing the system operation of the data communications system of the present invention.
Fig. 4 is a flowchart showing the operation of the data communications system of the present invention.
Fig. 5 is a preferred embodiment with the system configuration shown in Fig. 2A.
Fig. 6A is an example of information about a data communications session managed by a communication control program C.
Fig. 6B is an example of the data communication conditions of each data communication session managed by a communication control program C.
Fig. 6C is an example of both the header of TCP/IP assigned as a transmission stop control packet and the value.
Fig. 6D is an example of both the header of TCP/IP assigned as a probe packet and the value.
Fig. 7 is a flowchart showing the operation in the case where a data link is established in the data communications system of the present invention.
Fig. 8 shows the configuration of an information processing device composing the terminal and router of the present invention.
Fig. 9 shows how to provide the software programs, etc., of the present invention.

The details of the present invention are described below with reference to the drawings.

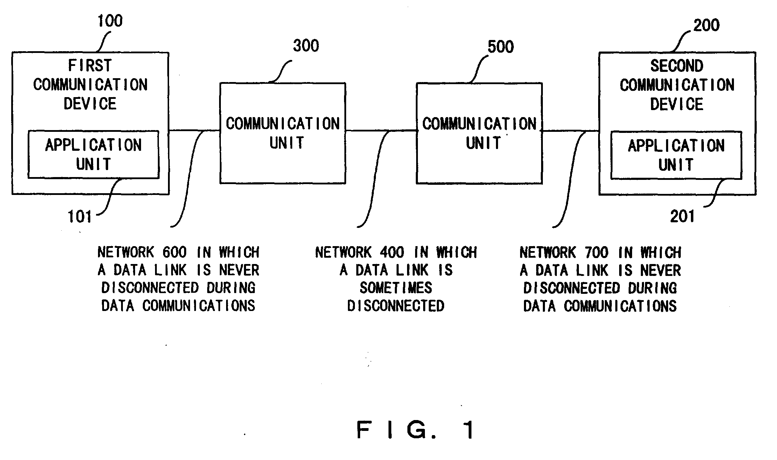

Fig. 1 shows the basic configuration of the data communications system of the present invention.

The data communications system of the present invention comprises at least the first and second communications devices 100 and 200 provided with respective application units 101 and 201 for instructing to conduct data communications with an opposite application unit. The data communications system also comprises first and second communication control units 300 and 500 which report a transmission stop instruction to the respective application units 101 and 201 of the first and second communications devices, respectively, to temporarily stop the data communications if a data link established in the network 400 between the first and second communication control units 300 and 500 is disconnected due to some cause, and makes one of the application units (for example, 101) report information, about data to be received or transmitted next, to the other application unit (for example, 201) and makes the application units re-start the transmission/reception of data based on the reported information if the data link is re-established in the network 400.

The only condition required by this data communications system is that each of the first and second communications devices 100 and 200 is provided with an application unit and has some data communication function, and the data communication device can be a terminal or router. It is sufficient if only the network 400 connecting the first Communications device 100 and the second communications device 200 is configured in such a way that some data link can be established somewhere in between. Specifically, the first communication device 100 and the second communication device 200 can be directly connected or another communication device (router, etc.) can be interposed in the network 600 or 700.

It is sufficient if only the functions of the communication control unit 300 and 500 are at both ends of a place where a data link is sometimes disconnected, and there is no need for the function to exist in each communication device. However, in a typical example, the function of the communication control unit 300 can be realized by providing each communication device (a terminal or router) with a program to perform each function of the communication control unit 300.

By adopting such a system configuration, the data communications can be re-started from the stopped position if the data link is re-established after a data link is disconnected due to some cause.

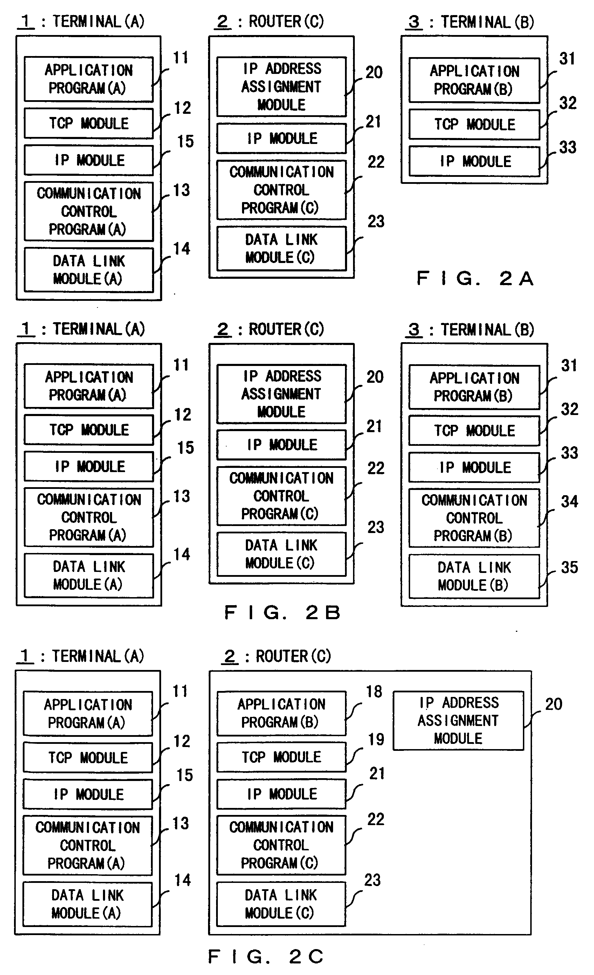

The detailed configuration of the data communications system of the present invention is described below. Figs. 2A through 2C show the Configurations of the data communication systems of the present invention.

A summary of each of the data communication systems shown in Figs. 2A through 2C is given first.

In Figs. 2A through 2C, a terminal (A) 1 originates a call to a router (C) 2, establishes both a data link and a data communication session and transmits /receives data with an opposite application program. In this example, the terminal (A) 1 comprises an application program 11, a communication control program 13, a data link module 14, etc.

The application program (A) 11 performs a variety of processes, and in this example, it instructs to transmit/receive data.

The communication control program (A) 13 controls the data communications.

The data link module (A) 14 establishes a data link by originating a call in the network to connect the terminal to a router (C) 2.

The router (C) 2 is connected to the terminal (A) 1 to transmit/receive data with, for example, a terminal (B) 3. In this example, the router (C) 2 comprises a communication control program (C) 22 and a data link module (C) 23, etc.

The communication control program (C) 22 controls the data communications.

The data link module (C) 23 establishes a data link in the network to connect the router (C) 2 to the terminal (A) 1.

The terminal (B) 3 is connected to the router (C) 2 to transmit/receive data with the application program (A) 11 of the terminal (A) 1. The terminal (B) 3 comprises an application program (B) 31, etc.

The respective correspondence between the basic configuration of the data communications system shown in Fig. 1 and each of Figs. 2A through 2C is as follows.

In Fig. 2A, the terminal (A) 1 corresponds to the first communication device 100, the terminal (B) 3 corresponds to the second communication device 200 and the communication control programs 13 and 22 correspond to the communication control units 300 and 500.

In Fig. 2B, the terminal (A) 1 corresponds to the first communication device 100, the terminal (B) 3 corresponds to the second communication device 200 and the communication control programs 13, 22 and 34 correspond to the communication control units 300 and 500.

In Fig. 2C, the terminal (A) 1 corresponds to the first communication device 100, the router (C) 3 corresponds to the second communication device 200 and the communication control programs 13 and 22 correspond to the communication control units 300 and 500.

Next, a summary of each of the operations is given.

If data link module (A) 14 of the terminal (A) 1 establishes a data link by originating a call to the router (C) 2, the communication control program (A) 13 establishes a data communication session and data (packets) are transmitted/received between the application program (A) 11 of the terminal (A) 1 and the application program (B) 3.

If the data link established in the network is disconnected due to some cause while the data are transmitted/received, the communication control program (A) 13 provided in the terminal (A) 1 transmits a transmission stop instruction to the application program (A) 11 and makes the application program (A) 11 temporarily stop the data communications. If the data link module (A) 14 reestablishes the data link, the communication control program (A) 13 re-starts the stopped data communications and simultaneously the communication control program (C) 22 provided in the router (C) 2 transmits a transmission stop instruction to the application program (B) 31 of the terminal (B) 3 to make the application program (B) 31 temporarily stop the transmission and re-starts the stopped data communications if the data link is re-established.

At this time, the communication control programs transmit, as a transmission stop instruction, a packet indicating that a receiving buffer on a receiving side is full to prevent the data communication session from being disconnected. However, the transmission stop instruction is not limited to a packet indicating that the receiving buffer on the receiving side is full, and a variety of information which can temporarily stop the data communications without disconnecting the data communication session can be adopted as the transmission stop instruction.

It is configured in such a way that the communication control program (A) 13 and communication control program (C) 22 report the sequence number of data to be transmitted next to the application program (B) 31 and application program (A) 11, respectively, and re-start the stopped data communications from data of the sequence number if the data link modules (A) 13 and data link module (B) 23 re-establish the data link.

It is also configured in such a way that the same address is assigned to the same terminal as that assigned immediately before if the data link is reestablished.

It is also configured in such a way that the input of authentication information can be omitted if a caller number coincides with caller number information which is registered in a table in advance or caller number information which has been authenticated before and is temporarily registered in a table at the time of establishing a data link or reestablishing the data link.

Therefore, if a data link is disconnected due to some cause while terminals are transmitting /receiving data via a network, the communication control programs on both disconnected sides transmit a transmission stop control packet to the respective application programs, store the transmission/reception information, and make the application programs temporarily stop the transmission /reception. If the data link is re-established, the communication control programs transmit the stored transmission/reception information to the application programs and re-start the stopped data communications from the stopped position. By doing so, the data communication session is held and the stopped data communications can be re-started at the time of the re-establishment of the data link even if the data link is disconnected.

Figs. 2A through 2C are described in more detail below.

Fig. 2A shows a case where only one terminal is required to establish a data link with a router and the terminal (B) 3 is always connected to a network, such as a LAN, etc. Fig. 2B shows a case where both terminals are required to establish a data link with a router. Fig. 2C shows a case where there is the application program of the terminal (B) 18, which is the opposite application program of the terminal (A) 1, in a router.

In Figs. 2A through 2C, the terminal (A) 1 is mobile and transmits/receives data, and in this example, it comprises an application program (A) 11, a TCP module 12, IP module 15, a communication control program (A) 13, a data link module (A) 14, etc.

The application program (A) 11 performs a variety of processes according to a program, and in this example, it transmits/receives data and performs a variety of processes.

Both the TCP module 12 and IP module 15 transmit/receive data with an opposite terminal (B) 3 according to a publicly known TCP/IP.

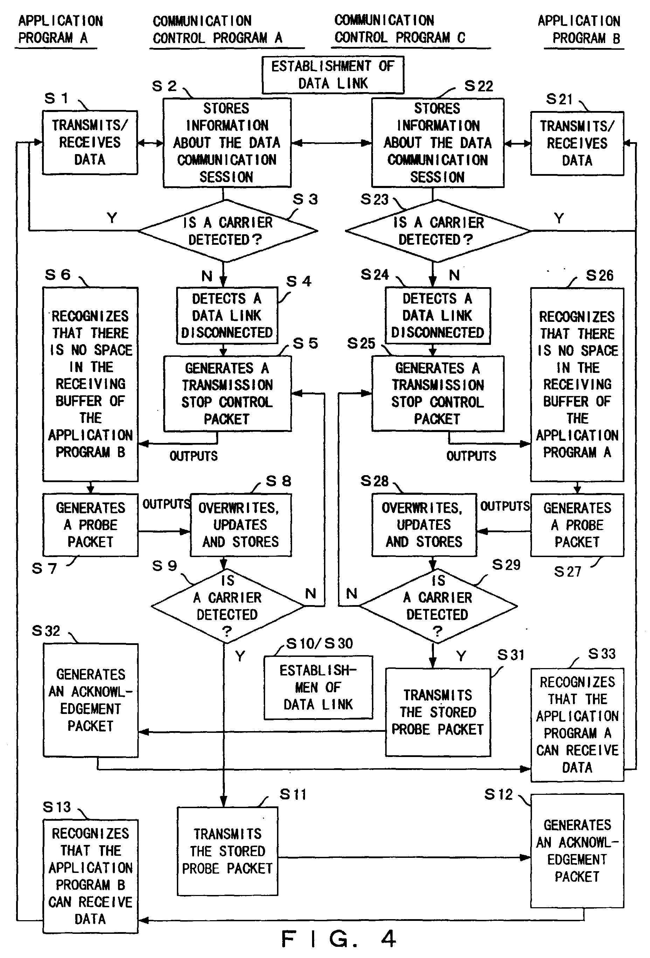

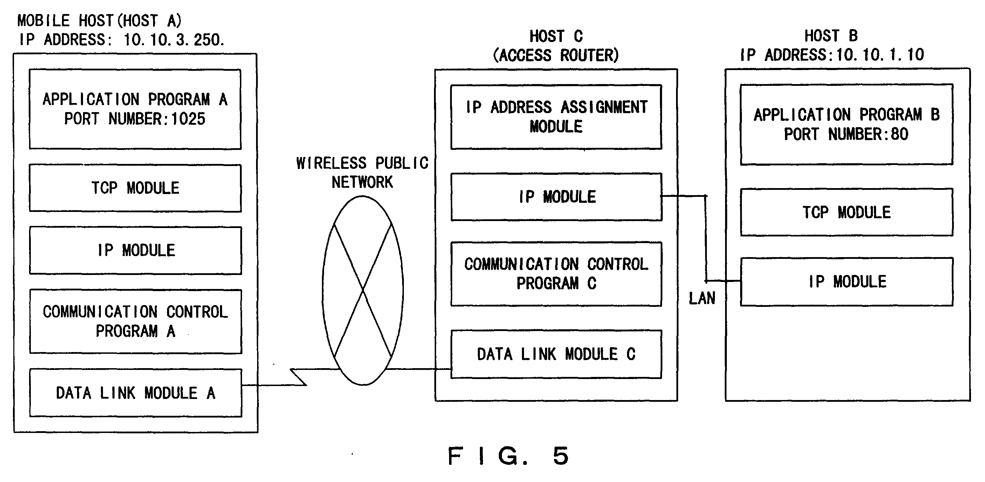

The communication control program (A) 13 controls data communications, the details of which are described later with reference to Figs. 4 and 5.

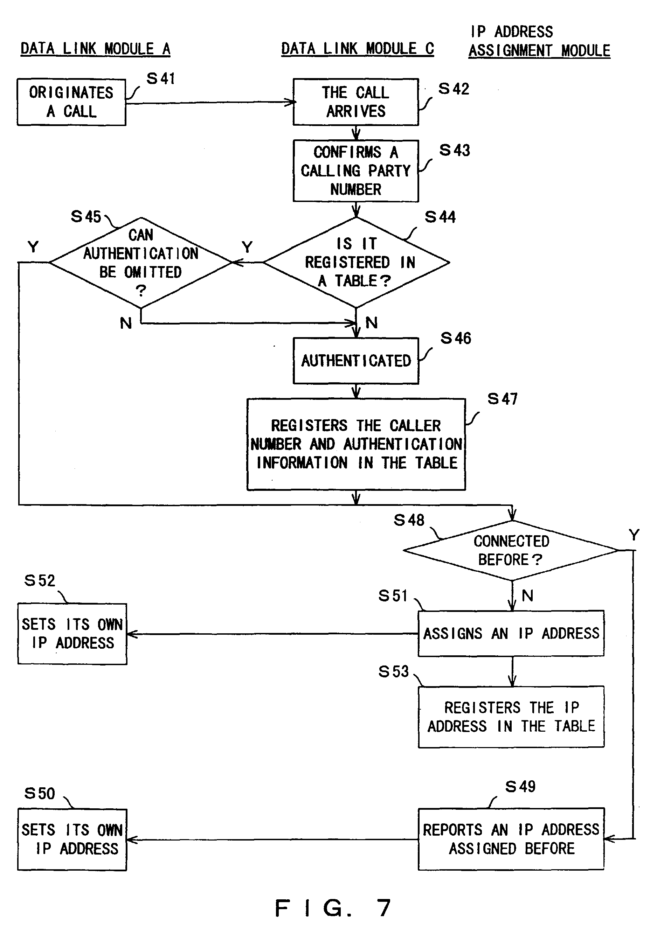

The data link module (A) 14 originates a call to the router (C) 2 and establishes a data link, the details of which are described later with reference to Fig. 7.

The router (C) 2 is connected to the terminal (A) 1 and relays data communications. The router (C) 2 comprises an IP address assignment module 20, an IP module 21, a communication control program (C) 22, a data link module (C) 23, etc.

The IP address assignment module 20 assigns a unique IP address to the terminal (A) 1, etc.

The communication control program (C) 22 controls data communications between the terminal (A) 1 and terminal (B) 2, the details of which are described later with reference to Figs. 4 and 5.

The data link module (C) 23 establishes a data link with the terminal (A) 1 in the network, the details of which are described later with reference to Fig. 7.

The terminal (B) 3 is connected to a data communication network, and in this example, it comprises an application program (B) 31, TCP/IP modules 32 and 33, etc.

The application program (B) 31 transmits/receives data and performs a variety of processes. In this example, the application program (B) 31 becomes the opposite application program with which the terminal (A) 1 transmits/receives data.

The TCP/IP modules 32 and 33 transmit/receive data with the terminal (A) 1 according to the publicly known TCP/IP.

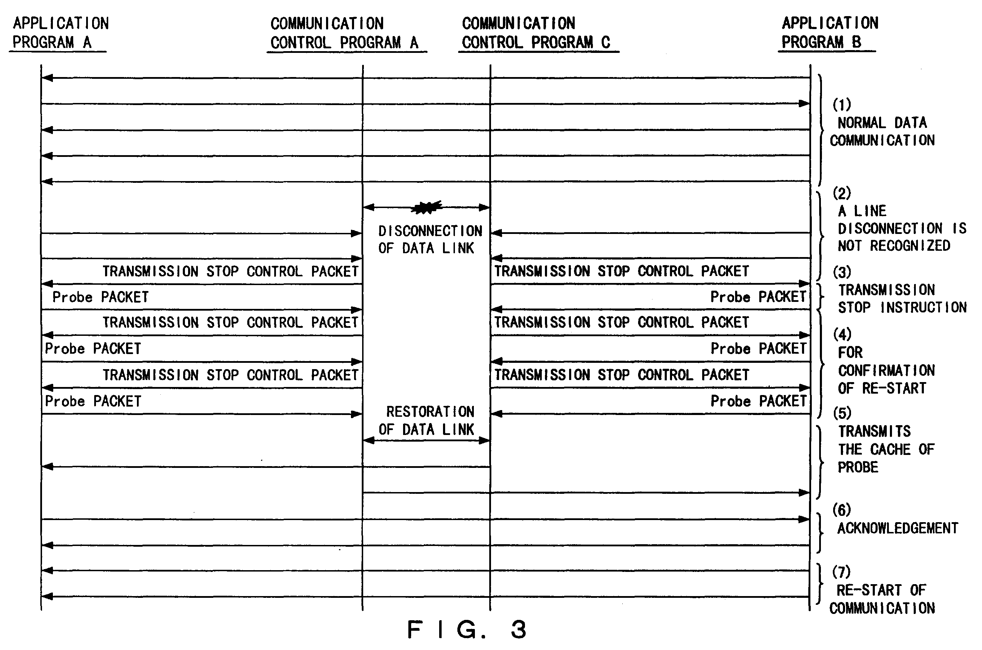

Fig. 3 is a timing chart showing the operations of the system shown in Figs. 2A through 2C.

In Fig. 3, an application program A, a communication control program A, a communication control program C and an application program B correspond to the application program (A) 11, communication control program (A) 13, communication control program (C) 22 and application program (B) 31, respectively.

In Fig. 3, in (1), data communications are performed using publicly known TCP/IP. The application program A (application program (A) 11 which operates in the terminal (A) 1 shown in Fig. 2) and the application program (B) 31 which operates in the terminal (B) 3 transmit/receive data to and from one another in a TCP session, which is a session for transmitting/receiving data between two terminals via TCP/IP.

(2) shows a state where a data link disconnection is not recognized yet.

In (3), the communication control programs A and C which detect a data link disconnection transmit a transmission stop control packet to their own application programs A and B, respectively.

In (4), the application programs A and B transmit probe packets for confirming the re-start to application programs B and A, respectively, and each of the communication control programs A and C performs operation (3) in response to the probe packet.

In (5), the communication control programs A and C transmit the cache of the probe (which includes the sequential number of data which is transmitted/received next ) to the respective opposite application programs B and A, respectively, since the data link is re-established.

In (6), acknowledgement of the packet in (5) is transmitted/received.

In (7), the communications re-starts. Specifically, in (4) the application programs A and B transmit a packet which includes the sequential number to be transmitted/received next, which is received in (5) and the data communications are restored to normal.

As described above, if a data link is disconnected due to some cause, the communication control programs A and C make the application programs A and B recognize that the respective opposite receiving buffers are full and data cannot be received by transmitting a transmission stop control packet (acknowledgement packet for reporting that the receiving buffer is full, with the window size of 0) to the application programs A and B, respectively. If the data link is re-established, the communication control programs A and C transmit the cashed probe packet which includes the sequential number of data which is transmitted/received next to the application programs B and A, respectively, confirm that there is a space in the receiving buffer and re-start the stopped data communications from the sequential number. By doing so, the data communications can be re-started from a packet of the stopped sequential number at the time of re-start even if a data link is disconnected.

If in Fig. 3, a data link between the communication control programs A and C is disconnected, the application programs A and B are called its own application program and an opposite application program, respectively, when they are seen from the side of the communication control program A. If they are seen from the aide of the communication control program C, the application programs B and A are called its own application program and an opposite application program, respectively. In other words, even if a link in a radio communication, etc., is disconnected, an application program which can communicate with the relevant communication control program is called its own application program, and an application program which cannot communicate with the relevant communication control program is called an opposite application program.

Fig. 4 is a flowchart showing the operation of the data communication system of the present invention. In Fig. 4, an application program A, a communication control program A, a communication control program C, an application program B correspond to the application program (A) 11 and communication control program (A) 13 of the terminal (A) 1, the communication control program (C) 22 of the router (C) 2 and the application program (B) 31 of the terminal (B) 3, respectively. The communication control program C can also be provided in the terminal (B) 3.

In Fig. 4, in S1 the application program A instructs to transmit/receive data. This means that a data link is already established between the communication control programs A and C, a data communication session is also established and data are transmitted/received between the application programs A and B using a packet according to the TCP/IP.

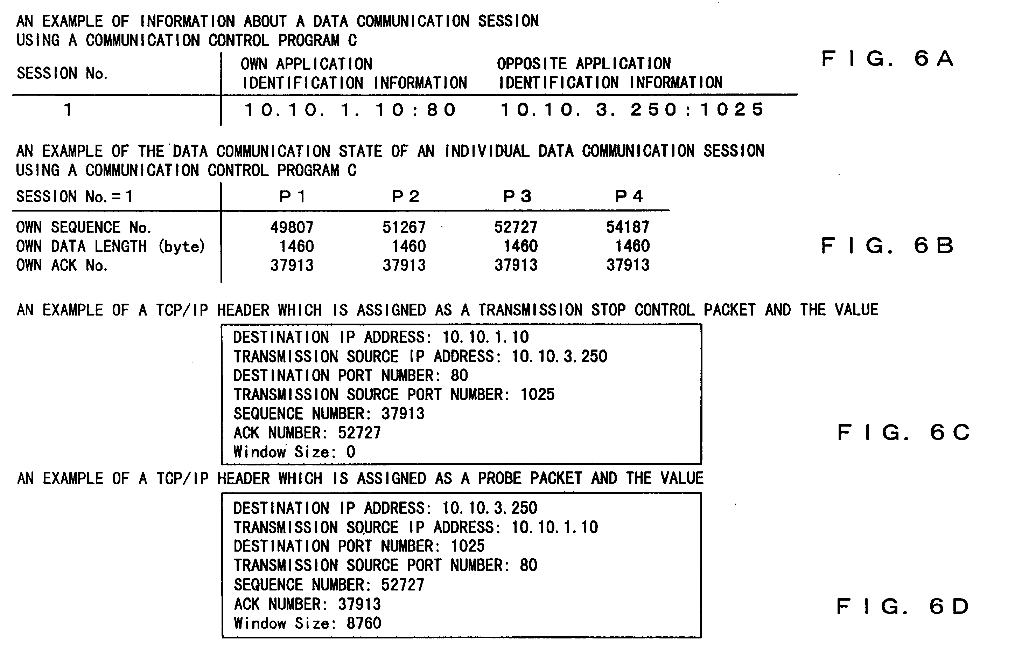

In S2, the communication control program A stores information about the data communication session. For example, the communication control program A stores the session number, its own sequence number, its own data length and its own ACK number (these are described later), just like the communication control program C manages information about the data communication state of each data communication session shown in Fig. 6B. And the communication control program A stores the sequence number to be transmitted/received next. "Its own" means information about data transmitted by its application program of the relevant communication control program.

In S3, it is judged whether a carrier is detected. If the answer is "Yes", the flow returns to S1 to repeat S1 since it means that a data link is established. If the answer is "No", in S4 it is judged that a failure is detected and the flow proceeds to S5 since it means that the data link is disconnected.

In S5, a transmission stop control packet is generated. Specifically, since it is judged that the data link is disconnected, the communication control program A generates a packet for instructing the application program A to temporarily stop the transmission since an opposite receiving buffer is full, for example, in the TCP/IP, which is used, as a transmission stop control packet, such as a packet similar to a packet generated by the communication control program C shown in Fig. 6C, which is described later, and transmits the packet to the application program A.

In S6, on receipt of the packet generated in S5, the application program A recognizes that the receiving buffer of the opposite application program B is full.

In S7, a probe packet is generated. Specifically, the application program A generates a probe packet for the application program A for making an inquiry about whether there is a space in the receiving buffer of the opposite application program B (for example, a packet similar to the packet generated by the communication control program C shown in Fig. 6D, which is described later), and outputs the packet to the communication control program A.

In S8, the probe packet is overwritten, updated and stored. The communication control program A overwrites, updates and stores the contents of the packet transmitted from the application program A in S7 (stores the latest contents of the transmitted packet).

In S9 it is judged whether a carrier is detected. Specifically, it is judged whether the data link is re-established after the data link is disconnected and a carrier is detected. If the answer is "Yes", the flow proceeds to S11. If the answer is "No", the flow returns to S5 to repeat S5.

In S11, the stored probe packet is transmitted to the opposite application program B.

In S12, on receipt of the packet transmitted in S11, the opposite application program B generates an acknowledgement packet indicating the current real size of the receiving buffer, under the control of the TCP/IP, and transmits the packet to the application program A.

In S13, on receipt of the packet transmitted in S12, the application program A recognizes that the application program B can receive data. Then, the flow returns to S1 and re-starts normal data communications.

In the same way, in S21 through S33, if a data link is disconnected, by way of the same operations as described in S1 through S13, the communication control program C reports to the application program B that there is no space in the opposite receiving buffer, the application program B temporarily stops the data communications and outputs to the communication control program C a receiving buffer size confirmation packet. If the data link is reestablished, the application program B transmits the stored probe packet to the opposite application program A. On receipt of the response packet, the application program B judges that the data communications can be re-started. Then, the flow returns to S21 and the data communications can be re-started.

Fig. 5 is a preferred embodiment with the system configuration shown in Fig. 2A. In Fig. 5, a mobile host, a host C and a host B correspond to the terminal (A) 1, router (C) 2 and terminal (C) 3, respectively, shown in Fig. 2. IP addresses and port numbers are assigned as follows.
Mobile host: IP address: 10.10.3.250
-Application program A: Port number: 1025
Host B : IP address: 10.10.1.10
-Application program B: Port number: 80

Figs. 6A through 6D show examples of information, etc., used in the case where communications are conducted in the system shown in Fig. 5.

Fig. 6A is an example of information about a data communications session managed by a communication control program C. This is an example of information extracted from a header section and stored when the application program A in the mobile host A shown in Fig. 5 transmits a packet to the host C on receipt of a communication instruction from the application program A, and stores the following information, which is stored in S22 shown in Fig. 4.
Session number: 1
Own application program identifying information: 10.10.1.10: 80
Opposite application program identifying information: 10.10.3.250: 1025

The session number is a unique sequential number attached to a session. The own application program identification information is the combination of the IP address 10.10.1.10 of its own application program (application program B here) and the port number 80 of the application program B. The opposite application program identification information is the combination of the IP address 10.10.3.250 of the opposite application program (application program A here) and the port number 1025 of the application program A.

As described above, in this example, the application program A conducts data communications. The communication control program C detects and stores the address information of both the application program B and the opposite application program A. By doing so, if the data link is re-established after a data link is temporarily disconnected, the data communications can be re-started between the application programs B and A in the data communication session based on the stored information.

Next, the details of information, etc., used to re-start the data communications from the stopped position are described with reference to Figs. 6B through 6D.
(1) The communication control program C recognizes that the TCP/IP packets P1 (sequence number 49807, data length 1460, ACK number 37913) through P4 (sequence number 54187, data length 1460, ACK number 37913) of a session number 1 have been transmitted to the opposite application program A in a mobile host without receiving an acknowledgement packet from the application program A.
(2) In the above-described state, on receipt of an acknowledgement packet with sequence number 37913 and ACK number 52727 from the application program A, the communication control program C judges that packet numbers P1 and P2 reach the application program A and deletes information about the packets P1 and P2 from a management table (Fig. 6B). As a result, only packet numbers P3 and P4 remain in the management table.
(3) If the data link is disconnected before the acknowledgement packets of the packets P3 and P4 are received, there is a possibility that the packets P3 and P4 may not reach the opposite application A although the packets reach the host C. Therefore, the communication control program C instructs the application program B to transmit packets again from the packet P3 at the time of re-establishment of the data link when issuing a transmission stop control instruction to the application program B. Specifically, a transmission control packet in which the sequence number of the packet P3 shown in Fig. 6C is designated as the ACK number of the packet, the ACK number of the packet P3 shown in Fig. 6C is designated as the sequence number of the packet and the window size of the packet is designated as 0, is transmitted to the application program B as a transmission stop control instruction.
(4) Fig. 6C shows a transmission stop control instruction which the communication control program C issues to the application program B in this example. On receipt of the transmission stop control instruction shown in Fig. 6C, the application program B transmits a probe packet including information shown in Fig. 6D to the application program A at specific intervals under the control of the TCP/IP and checks whether the application program A can receive data.
(5) The probe packet which is outputed from the application program B, shown in Fig. 6D, the communication control program C overwrites, updates and stores the probe packet every time a new probe packet is received until the data link is re-established or a time-out is issued, and returns the transmission stop control packet shown in Fig. 6C in response to the packet.
(6) If the data link is re-established before the time-out, the communication control program C transmits the probe packet shown in Fig. 6D which is received from the application program B and stored, to the application program A. On receipt of an acknowledgement packet sent in response to the probe packet transmitted by the application program A, the application program B judges that the application program A can receive data and re-starts the stopped data transmission.
(7) If the data link is not re-established by the time-out, the communication control program C judges that the data link will not be established in the future, transmits a data communication session discard request based on the specification of the TCP/IP, which is not shown, to the application program B and compulsorily terminates the data communication session.

Fig. 7 is a flowchart showing the operation (the establishment of a data link) in the data communications system of the present invention. In Fig. 7, a data link module A and a data link module C correspond to the data link module A and data link module C provided in the terminal (mobile host) 1 and router (host C), respectively, shown in Figs. 2A and 5.

In Fig. 7, in S41 the data link module A originates a call.

In S42, the call originated in S41 reaches the data link module C.

In S43, the caller number is checked. Specifically, on receipt of the call in S42, information about the caller which is obtained from a telephone network by originating a call is checked.

In S44, it is checked whether the caller number is registered in a table. Specifically, it is checked whether the caller number obtained in S43 is already registered in a table. If the answer is "Yes", the flow proceeds to S45. If the answer is "No", the flow proceeds to S46 to perform the authentication.

In S45, it is checked whether the authentication can be omitted. Specifically, it is checked whether the caller number coincides with a caller number which has been registered as a trusted number before or a caller number which has been successful in authentication and temporarily registered at the new connection. If the answer is "Yes", the authentication is omitted, and the flow proceeds to S48. If the answer is "No", the flow proceeds to S46 to perform the authentication.

In S46, the authentication is performed. Specifically, if it is judged from the user ID, password and the caller number, if required, that the caller number coincides with the caller number which is already registered in an authentication table, the caller number is authenticated and the flow proceeds to S47.

In S47, both the caller number and authentication information (user ID, password, etc.) are registered in the authentication table.

In S48, it is checked whether the device has been connected before. Specifically, it is checked whether the caller number checked in S43 is already registered in the management table since the caller has been connected before. If the answer is "Yes", in S49 the same IP address as the IP address assigned before is reported, and in S50 the data link module A, which is the caller, stores the IP address as its own IP address. Then, the flow returns to S1 shown in Fig. 4 and the data communication re-starts. If the answer is "No" in S48, in S51 an IP address is assigned and transmitted to the data link module A, and in S53 the IP address is registered in the management table since it is found that the caller has never been connected before. Then, in S52 the data link module A stores the IP address as its own IP address.

As described above, if the data link is temporarily disconnected, the same IP address as that registered before is assigned at the time of the reestablishment of the data link in steps S41, S42, S43, Yes of S44, Yes of S45, S48, S49 and S50, and the stopped data communications can be re-started between the applications A and B using the IP address.

The above-described data communication control using a transmission stop control packet can also be applied to a publicly known virtual private network (VPN) technology in which communications are conducted by considering one session of a TCP/IP as a data link.

Although the details of the configuration shown in Fig. 2A have been described up to this point, the same description also applies to the configurations shown in Figs. 2B and 2C.

In the case of the configuration shown in Fig. 2B, the communication control program (C) 22 in the router (C) 2 manages two kinds of management data; management data shown in Figs. 6A and 6B in which the application program (A) 11 is designated as its own application program and management data shown in Figs. 6A and 6B in which the application program (B) 31 is designated as its own application program. If the data link is disconnected, the communication control program (C) 22 recognizes its own application program and operates according to the following rules.
(Rule 1) If either of the two data links is disconnected abnormally, it is determined that there is its own application program in the data link which is not disconnected.
(Rule 2) If both of the data links are disconnected, a transmission stop control packet is not transmitted. Specifically, the respective communication control programs in the terminal (A) 1 and terminal (B) 3 transmit a transmission stop control packet only to their respective own application programs.

If a data link is disconnected because the communication control program (C) 22 operates according to the above-described rules and the data link is re-established, the data communications can also be re-started from the stopped position like the configuration shown in Fig. 2A.

Although the above description is sufficient for the configuration shown in Fig. 2B, the supplementary description is further made.

The establishment of a data link prior to the commencement of data communications in the configuration shown in Fig. 2B is first described. There are the following three kinds of methods, which are all equivalent in the present invention, for establishing a data link.
(Method 1) Each of terminal (A) 1 and terminal (B) 3 originates a call to the router (C) 2 and establishes a data link.
(Method 2) After one of the terminals (for example, terminal (A) 1) originates a call and establishes a data link, detects that the communication control program (C) 22 has received a communication packet to the other terminal (for example, terminal (B) 3) from the terminal (terminal (A) 1), the communication control program (C) 22 instructs the data link module (C) 23 to originate a call to the other terminal (terminal (B) 3) and a data link is established between the router (C) 2 and the terminal (B) 3.
(Method 3) On receipt of a packet which must be transmitted via the router (C) 2, the communication control program (for example, communication control program (A) 13) in one of the terminals (for example, terminal (A) 1) instructs a data link module A (14) to originate a call to the router (C) 2 and establishes a data link. Then, the communication control program (communication control program (A) 13) transmits the packet which must be transmitted via the router (C) 2, to the other terminal (B) 3, detects that the communication control program (C) 22 in the other terminal (B) 3 has received a communication packet which is transmitted from the terminal (terminal (A) 1) to the other terminal (for example, terminal (B) 3), and then the communication control program (C) 22 instructs the data link module (C) 23 to originate a call to the other terminal (terminal (B) 3) and a data link is established between the router (C) 2 and the terminal (B) 3.

As described above, there are two kinds of control at the time of an abnormal disconnection/process at the time of data link re-establishment, shown in Fig. 2B: a case where the communication control program (C) 22 in the router (C) 2 manages the management data shown in Fig. 6 in which the application program (A) 11 is designated as its own application program and a case where the communication control program (C) 22 in the router (C) 2 manages the management data shown in Fig. 6 in which the application program (B) 31 is designated as its own application program. The same description as the description used with reference to Fig. 2A applies to these operations by determining the recognition direction of its own application program according to the (Rule 1) and (Rule 2) described above. Specifically, these operations are as follows.

It is assumed that a data link between the terminal (A) 1 and the router (C) 2 (hereinafter simply called a "data link A-C") is abnormally disconnected while the application program (A) 11 and the application program (B) 31 are transmitting/receiving data after the data link is established by way of one of Method 1, Method 2 or Method 3, described above. In this case, by following the Rule 1, the system can be controlled as follows in the same way as in the case of the configuration shown in Fig. 2A. The communication control program (A) 13 transmits a communication stop control packet to the application program (A) 11, which is its own application program, and the communication control program (C) 22 transmits a communication stop control packet to the application program (B) 31, which is its own application program. After the data link A-C is re-established, the communication control program (A) 13 transmits the cached probe packet to the application program (B) 31, which is its opposite application program, and the communication control program (C) 22 transmits the cached probe packet to the application program (A) 11, which is its opposite application program. After the respective opposite application programs receive an acknowledgement packet returned by the respective application programs, the data communications can be re-started.

It is assumed that a data link between the terminal (B) 3 and the router (C) 2 (hereinafter simply called a "data link B-C") is abnormally disconnected when the application program (A) 11 and the application program (B) 31 are transmitting/receiving data after the data link is established by way of one of Method 1, Method 2 or Method 3, described above. In this case, by following Rule 1 described above, the system can also be controlled as follows in the same way as in the case of the configuration shown in Fig. 2A.

It is assumed that in addition to the data link A-C, the data link B-C is abnormally disconnected while the application program (A) 11 and the application program (B) 31 are transmitting/receiving data after the data link is established by way of one of Method 1, Method 2 or Method 3, described above. In this case, by following Rule 1 and Rule 2 described above, the system can also be controlled in the same way as the abnormal disconnection of the configuration shown in Fig. 2A.

Since the data link B-C remains established when the data link A-C is abnormally disconnected, the system first operates as follows according to Rule 1 described above. The communication control program (A) 13 transmits a communication stop control packet to the application program (A) 11, which is its own application program, and the communication control program (C) 22 transmits a communication stop control packet to the application program (B) 31, which is its own application program.

If in addition to the data link A-C, the data link B-C is abnormally disconnected, the communication control program (C) 22 in the router (C) 2 moves to take control of data communications according to Rule 2 described above (stops the transmission of a transmission stop control packet) since the data links on both sides are abnormally disconnected. However, since the data link B-C is disconnected, the communication control program (B) 34 in the terminal (B) 3 transmits a communication stop control packet to the application program (B) 31, which is its own application program. The communication control programs (communication control program (A) 13 and communication control program (B) 34) in both of the terminals (terminal (A) 1 and terminal (B) 3) enter into a state of transmitting a communication stop control packet to their respective own application programs until either of the data links is re-established. Specifically, steps S5 through S8 performed between the communication control program (A) 13 and the application program (A) 11 shown in Fig. 4 are repeated in both of the terminals.

If either of the data links is re-established (for example, data link B-C), the communication control program (C) 22 recognizes according to Rule 1 described above that the application program (B) 31 is its own application program and starts the control. Since the data link B-C is re-established, the communication control program (B) 34 transmits the stored probe packet to the application program (A) 11 in the terminal (A) 1 (However, since the data link A-C is disconnected, the probe packet reaches only the communication control program (C) 22), and tries to re-start the data communications. However, since the data link A-C is not re-established yet, the communication control program (C) 22 transmits a transmission stop control packet to the application program (B) 31 which the communication control program (C) 22 recognizes as its own application program or transmits the probe packet transmitted from the communication control program (B) 34 to the application program (A) 11 after re-establishing the data link by originating a call to the terminal (A) 1. By doing so, the communication control program (C) 22 tries to re-start the data communications.

If the other data link (for example, data link A-C) is re-established, the communication control program (A) 13 transmits the stored probe packet to the application program (B) 31, which is its own application program, and the communication control program(C) 22 transmits the stored probe packet to the application program (A) 11. If the respective application programs receive an acknowledgement packet from the respective opposite application programs, the data communications are re-started, and each communication control program enters into the state of a normal communication control.

As described above, the configuration shown in Fig. 2B can be realized in the same way as in the case of the configuration shown in Fig. 2A.

In the case of the configuration shown in Fig. 2C, the router (C) 2 shown in Fig. 2A comprises an application program (B) 18 and the data communication route between the application program (B) 18 and the communication control program (C) 22 in the router (C) 2 is never disconnected. Therefore, the configuration shown in Fig. 2C can be considered to be a special case where the data communication route is between the router (C) 2 and the terminal (B) 3 in Fig. 2A, and it can be realized in the same way as in the case of the configuration shown in Fig. 2A.

Although the details of the data communication system shown in Figs. 2A through 2C have been described up to this point, the present invention is not limited to the systems shown in Figs. 2A through 2C.

Although a system using one router has been described in Figs. 2A through 2C, the present invention is also applicable to a data communications system using two or more routers. For example, a system in which data communications can be realized between two terminals by providing another router with the same configuration as the router (C) 2 instead of the terminal (A) 1 and another terminal connected to the router via a LAN and establishing a data link between the two routers in Fig. 2A, can also be considered. A system in which data communications can be realized between two terminals by providing another router with the same configuration as the router (C) 2 instead of the terminal (A) 1 and establishing a data link between the two routers in Fig. 2A, can also be considered. The present invention can also be applied to such a system using a plurality of routers. In this case, even if one of the data links is disconnected, the data communications can be re-started from the stopped position when the data link is re-established.

In this way, the present invention can be applied to all data communications systems in which data are transmitted/received between application programs in two terminals with a plurality of routers connected to a wired or wireless network, and it is not limited to the system configurations shown in Figs. 2A through 2C.

As described above, the present invention is configured in such a way that, if a data link is disconnected due to some cause while data are transmitted/received between terminals via a network, each of the communication control programs on both sides of the disconnected link transmit a packet indicating that there is no space in the receiving buffer of the opposite terminal to the application program, stores the transmission/reception information and makes the application program temporarily stop the transmission/reception. If the data link is re-established, each communication control program transmits the stored transmission/reception information to the opposite application program and re-starts the data communications. Therefore, even if a data link is disconnected, the system can hold the data communication session and re-start the stopped data communications from the stopped position at the time of the re-establishment of the data link.

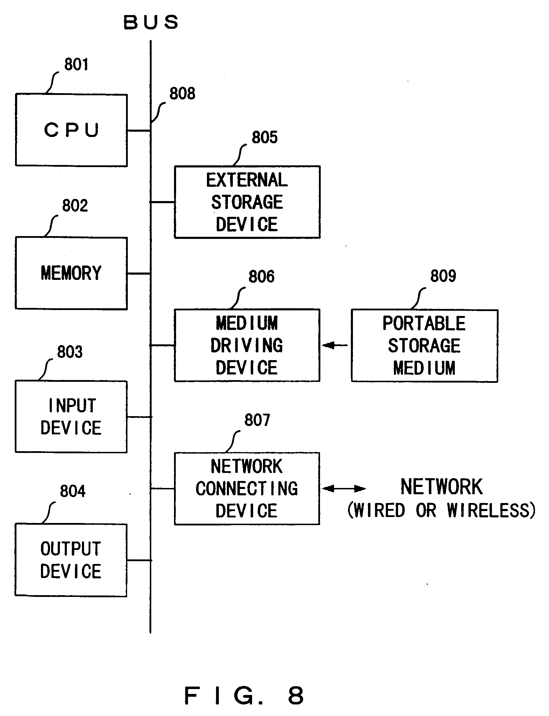

The terminals and routers composing the data communications system described above can be configured using an information processing device (computer) as shown in Fig. 8. The information processing device shown in Fig. 8 comprises a CPU (central processing unit) 801, a memory 802, an input device 803, an output device 804, an external storage device 805, a medium driving device 806 and a network connecting device 807, which are connected with one another using a bus 808. The CPU 801 can also be a microprocessor.

The memory 802 includes, for example, a ROM (read only memory), RAM (random access memory), etc., and stores both a program and data to be used for the process. The CPU 801 performs necessary processes by using the memory 802 and running the program. Specifically, the application programs, communication control programs, etc., described in this specification can be realized by the program stored in the memory 802.

User operations, such as mailing, Internet browsing, etc., can be inputted to the information processing device via the input device 803. The output device 804 is, for example, a display, speaker, etc., and presents the result of data communications to a user, etc., who attends a terminal.

The external storage device 805 is, for example, a magnetic disk, optical disk, magneto-optical disk, etc. The information processing device stores the program and data described above in this external storage device 805, and uses the program and data by loading them into the memory 802, if required.

The medium driving device 807 drives a portable storage medium 809, which is an arbitrary computer-readable storage medium, such as a memory card, floppy disk, CD-ROM (compact disk read only memory), optical disk, magneto-optical disk, etc. The program and data described above are stored in the portable storage medium 809 and are used by loading them to the memory 802, if required.

The network connecting device 807 communicates with outside devices via an arbitrary network, such as a LAN (local area network), radio network, etc. and transmits/receives data accompanying the communications. The information processing device receives the program and data described above from an outside device via the network connecting device 807 and uses the program and data by loading them in the memory 802, if required.

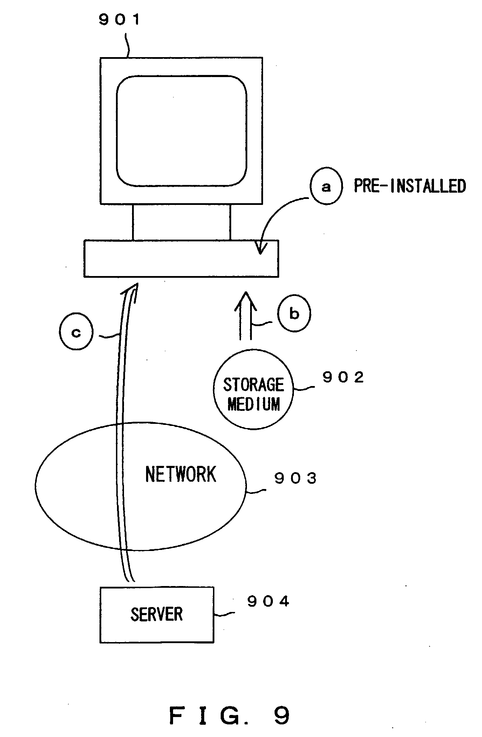

Fig. 9 shows how to provide a software program and data to be run in the information processing device of the present invention. The program and data are provided, for example, by way of one of the following three arbitrary methods.
(a) The program and data are provided and are installed in an information processing device 901, such as a computer, etc. In this case, the program and data are, for example, pre-installed at the factory before shipment.
(b) The program and data are provided and are stored in a portable storage medium 902. In this case, the program and data stored in the portable storage medium are installed in the external storage device of the information processing device 901, such as a computer, etc.
(c) The program and data are provided from a server 904 in the network 903. In this case, basically the information processing device 901, such as a computer, etc., obtains the program and data by downloading the program and data stored in the server 904.

## Claims

1. A data communications system which is composed of at least first and second communications devices (100, 200) each provided with an application unit (101, 201) instructing to conduct data communications with an opposite application unit (101, 201), comprising:
two communication control units (300, 500) reporting a transmission stop instruction to the respective application units (101, 201) of the first and second communications devices (100, 200) and making the application units (101, 201) temporarily stop the data communications if a data link established in a network between the first and second communications devices (100, 200) is disconnected due to some cause, and reporting information based on data received or transmitted next by one application unit (101, 201) to the other application unit (201, 101) and causing the application unit (101, 201) to re-start transmission/reception of data based on the reported information if the data link is re-established later.

2. The data communications system according to claim 1, wherein information that a receiving buffer on a receiving side of data is full is transmitted as the transmission stop instruction.

3. The data communications system according to claim 1, or 2, wherein the information based on data to be received or transmitted next which one application unit (101, 201) reports to the other application unit (201, 101) is the sequence number of data to be transmitted or received next by the respective application units (101, 201).

4. The data communications system according to claim 1, 2, or 3, further comprising:
an identification information assignment unit assigning the same identification information as identification information of the communication device (100, 200) which is used immediately before a data link is disconnected if a data link of an opposite communication device (100, 200) with which the communication device (100, 200) has communicated is once disconnected and the data link is re-established.

5. The data communications system according to claim 4, wherein the identification information comprises IP addresses.

6. The data communication system according to any preceding claim, wherein said communication control unit (300, 500) omits authentication of a caller if identification information of the caller coincides with a pre-registered identification information of the caller or coincides with identification information of the caller already authenticated at a time of establishment of a data link and the re-establishment.

7. A data communications system which is composed of a router (2), a first terminal (1) connected to the router (2) via a wireless network and a second terminal (3) connected to the router (2) via a wired network,
the first terminal (1) comprising:
an application unit (11) instructing to conduct data communications with an opposite application unit (31);
a data link module unit (14) establishing a data link between the first terminal (1) and the router (2) ;and
a first communication control unit (13) making said data link module unit (14) establish the data link between the first terminal (1) and the router (2) and controlling data communications between the first and second terminals (1, 3),
the second terminal (3) comprising:
an application unit (31) instructing to conduct data communications with an opposite application unit (11), and
the router (2) comprising:
a data link module unit (23) establishing a data link between the router (2) and the first terminal (1); and
a second communication control unit (22) making the data link module unit (23) establish a data link between the router (2) and the first terminal (1) when a call is originated, controlling data communication between the second and first terminals (1, 3) and transferring data to the opposite application unit (11, 31) if there is a data communication request from the first or second terminal; wherein:
if a data link between the first terminal (1) and the router (2) is disconnected due to some cause, the first communication control unit (13) of the first terminal (1) outputs a transmission stop instruction to an application unit (11) of the first terminal (1) to temporarily stop transmission and the second communication control unit (22) of the router (2) outputs a transmission stop instruction to an application unit (31) of the second terminal (3) to make the application unit (31) temporarily stop transmission, and
if the data link is re-established, the first communication control unit (13) of the first terminal (1) forwards information about data to be received or transmitted next by the application unit (11) of the first terminal (1) to the application unit (31) of the second terminal (3), the second communication control unit (22) of the router (2) reports information about data to be transmitted or received next by the application unit (31) of the second terminal (3) to the application unit (11) of the first terminal (1), and the application units (11, 31) of the first and second terminals (1, 3) re-start transmission/reception of data based on the respective forwarded information.

8. A data communications system which is composed of a router (2), first and second terminals (1, 3) connected to the router (2) via a wireless network,
each of the first and second terminals (1, 3) comprising:
an application unit (11, 31) instructing to conduct data communications with an opposite application unit (31, 11);
a data link module unit (14, 35) establishing a data link between the first or second terminal (1, 3) and the router (2); and
a first communication control unit (13, 34) making the data link module unit (14, 35) establish the data link and a data communication session between the first or second terminal and the router and controlling the data communications if there is a data communication instruction from the application unit, and
the router (2) comprising:
a data link module unit (23) establishing a data link between the first or second terminal (1, 3) and the router (2); and
a second communication control unit (22) making said data link module unit (23) establish the data link between the first or second terminal (1, 3) and the router (2) if a call is originated, and transferring data to the opposite application unit (11, 31) if there is a data communication request from the first or second terminal (1, 3); wherein:
if a data link between the first terminal (1) and the router (2) is disconnected due to some cause, the first communication control unit (13) of the first terminal (1) outputs a transmission stop instruction to the application unit (11) of the first terminal (1) to temporarily stop the transmission, and the second communication control unit (22) of the router (2) outputs a transmission stop instruction to the application unit (31) of the second terminal (3) to make the application unit (31) temporarily stop transmission, and
if the data link is re-established, the first communication control unit (13) of the first terminal (1) forwards information about data to be received or transmitted next by the application unit (11) of the first terminal (1) to the application unit (31) of the second terminal (3), the second communication control unit (22) of the router (2) forwards information based on data to be transmitted or received next by the application unit (31) of the second terminal (3) to the application unit (11) of the first terminal (1), and the application units (11, 31) of the first and second terminals (1, 3) re-start transmission/reception of data based on the respective forwarded information.

9. A data communications system which is composed of a router (2) and a terminal (1) connected to the router (2) via a wireless network,
the terminal (1) comprising:
an application unit (11) instructing to conduct data communications with an opposite application unit (18);
a data link module unit (14) establishing a data link between the terminal (1) and the router (2); and
a first communication control unit (13) making the data link module unit (14) establish the data link between the terminal (1) and the router (2) and controlling the data communications if there is a data communication instruction from the application unit (11), and
the router (2) comprising:
an application unit (18) instructing to conduct data communications with an opposite application unit (11);
a data link module unit (14) establishing a data link between the terminal (1) and the router (2); and
a second communication control unit (22) making the data link module unit (23) establish the data link between the terminal (1) and the router (2) and controlling the data communications if a call is originated; wherein:
if the data link between the terminal (1) and router (2) is disconnected due to some cause,
the first communication control unit (13) of the first terminal (1) transmits a transmission stop instruction to the application unit (11) of the first terminal (1) to temporarily stop the transmission, and the second communication control unit (22) of the router (2) outputs a transmission stop instruction to the an application unit (18) of the router (2) to make the application unit (18) temporarily stop transmission, and
if the data link is re-established, the first communication control unit (13) of the first terminal (1) forwards information about data to be received or transmitted next by the application unit (11) of the first terminal (1) to the application unit (18) of the router (2), the second communication control unit (22) of the router (2) forwards information about data to be transmitted or received next by the application unit (18) of the router, and the application units (11, 18) of the first terminal (1) and the router (2) re-start transmission/reception of data based on the respective forwarded information.

10. A terminal (1, 3) connected to a wired or wireless network via which data are transmitted/received between two terminals via routers (2), comprising:
an application unit (11, 31) instructing to conduct data communications with an application unit (31, 11) of an opposite terminal (3, 1);
a data link module unit (14, 35) establishing a data link between the terminal (1, 3) and the router (2); and
a communication control unit (13, 34) making the data link module unit (14, 35) establish the data link between the terminal (1, 3) and the router (2) and controlling the data communications; wherein:
if the data link established in the network is disconnected due to some cause, the communication control unit (13, 34) of the terminal (1, 3) outputs a transmission stop instruction to an application unit (11, 31) of the terminal (1, 3) to make the application unit (11, 31) temporarily stop the transmission,
if the data link is re-established in the network,
the communication control unit (13, 34) of the terminal (1, 3) forwards information about data to be received or transmitted next by the application unit (11, 31) of the terminal (1, 3) to an opposite application unit (31, 11), and
the application unit (11, 31) of the terminal (1, 3) re-starts the transmission/reception of data on a basis of the information about data to be transmitted or received next by the opposite application unit (31, 11) which is forwarded by the router (2).

11. A router (2) relaying communications between two terminals (1, 3) connected to a wired or wireless network, comprising:
a data link module unit (23) establishing a data link between the terminal (1, 3) and the router (2); and
a communication control unit (22) making said data link module unit (23) establish the data link between the terminal (1,3) and the router (2) and transferring the data to an opposite terminal (3, 1) if there is a data communication request from the terminal (1, 3); and
an identification information assignment unit assigning identification information identical to identification information of the terminal used immediately before a disconnection of the data link if the data link of the terminal (1, 3) communicating when the data link in the network has been disconnected is re-established,
wherein the communication control unit (22) of the router (2) transmits a transmission stop instruction to the opposite terminal (3, 1) to make the opposite terminal (3, 1) temporarily stop data communications if the data link established in the network is disconnected due to some cause, and the terminal (1,3) transmits to the opposite terminal (3, 1) information about data to be received or transmitted next if the data link in the network is re-established.

12. A data communications method for transmitting/receiving data between different application units in two communications devices, composing the steps of:
reporting a transmission stop instruction to the respective application units to make the respective application units temporarily stop data communications if a data link established in a network between the different communications devices is disconnected due to some cause, and
one application unit reporting information about data to be received or transmitted next to the other application unit and making the other application unit re-start transmission/reception of data based on the reported information, if the data link is re-established later.

13. Software used in a data communications system in which data are transmitted/received between two terminals (1, 3) via routers (2) connected to a wired or wireless network, comprising:
a program installed in the terminal (1, 3)
for originating a call to the router (2), establishing a data link between the terminal (1, 3) and the router (2)and conducting data communications if there is a data communications instruction from an application program (11, 31)installed in the terminal (1, 3)
for transmitting a transmission stop instruction to the application program (11, 31) to make the opposite application program (31, 11) temporarily stop transmission if the data link established between the terminal (1, 3) and router (2) is disconnected due to some cause, and
for reporting data based on data to be received or transmitted next by the application program (11, 31) to an opposite application program (31, 11) if the data link between the terminal (1, 3) and the router (2)is re-established; and
a program installed in a router (2)
for establishing a data link between the terminal (1, 3) and the router (2) if a call is originated and transferring the data to a corresponding opposite application program (31, 11) if there is a data communication request,
for transmitting a transmission stop instruction to the own application program (11, 31) to temporarily stop transmission if the data link between the terminal and router is disconnected due to some cause, and
for reporting to the opposite application program (31, 11)information based on data to be received or transmitted next by the application program (11, 31) if the data link between the terminal (1, 3) and router (2)is re-established.

14. Software according to claim 13, which further includes an application program (11, 31) for instructing to conduct data communications with an opposite application program(31, 11).

15. A data communications system which is composed of at least first and second communications devices (100, 200) each provided with application means (101, 201) for instructing to conduct data communications with an opposite application means (201, 101) comprising:
two communication control means (300, 500) for reporting a transmission stop instruction to the respective application means (101, 201) first and second communications devices (100, 200), making the application means (101, 201) temporarily stop the data communications if a data link is established in a network between the first and second communications devices (100, 200), and reporting information based on data received or transmitted next by one application means (101, 201) to the other application means (201, 101) and making the application means (101, 201) re-start transmission/reception of data based on the reported information.

16. A computer-readable storage medium on which is stored the software according to claim 13 or 14.
